# EUROPEAN PATENT APPLICATION

(11) **EP 4 749 118 A1**
(43) Date of publication of application: **27.05.2026**
(21) Application number: 24383270.6
(22) Date of filing: 25.11.2024
(51) Int. Cl.: F03D 1/00, F03D 13/10, F03D 13/25

(54) **A NACELLE SUPPORT SYSTEM FOR A NACELLE OF A WIND TURBINE**

(71) Applicant: Exponential Renewables, S.L., 08034 Barcelona (ES)
(72) Inventor: CASANOVAS BERMEJO, Jorge, 08034 Barcelona (ES); CASANOVAS BERMEJO, Carlos, 08034 Barcelona (ES); GARCIA DE LA FUENTE, Helena, 08034 Barcelona (ES)
(74) Representative: Araujo, Daniel

(57) **Abstract**

A nacelle support system (1) for a nacelle (2) of a wind turbine, comprising: a - support module (3) comprising: an open lower portion (30); an open front portion (31); a compartment (32) configured to receive a nacelle (2) through the open lower portion (30); and a locking system (33) for locking the nacelle (2) in an operative position (O) within the compartment (32); and - a support structure (4) comprising a base portion (40) and structural elements (41) extending upwards from the base portion (40); the nacelle support module (3) being configured to be connected to an upper part (410) of each of the structural elements (41); and the support structure (4) being configured such that an unobstructed operational space (S) is provided below the support module (3), said operational space (S) being configured to allow a nacelle (2) to be inserted into and/or removed from the compartment (32) through the open lower portion (30).

## Description

### TECHNICAL FIELD

The present invention relates to a nacelle support system for a nacelle of wind turbine. The nacelle support system comprises a nacelle support module with an inner compartment and a support structure for supporting the nacelle support module. The solution proposed by the present invention is applicable for both onshore applications and, very advantageously, for offshore applications.

### PRIOR ART

The size of wind turbines has grown significantly over the last few years and will continue to do so. This means that wind turbines are becoming increasingly massive, which makes it very difficult to mount and dismount the nacelles on the respective structural supports.

While this problem occurs for both onshore and offshore turbines, it is particularly relevant for offshore turbines. A point has been reached where conventional mobile cranes do not have the necessary capacity to lift very large modern turbines on top of their support structures. Indeed, the weight of these turbine nacelles are reaching 1000 metric tons or more, requiring the use of very large ringer cranes or very large vessel-mounted cranes to handle these nacelles and lift them on top of their support structures, typically a vertical tubular tower on either a bottom-fixed or floating substructure.

While the use of these very large external cranes could make sense in the construction phase due to continuous use in a relatively short period of time, once these very large turbines start operation, it is expected that these turbines will sometimes need to undergo heavy operation and maintenance (O&M) activities where a major component - such as a gearbox, generator, blades or an entire nacelle - needs to be brought back to port to be serviced or substituted. While this can sometimes be planned well ahead of time, these very large external cranes are often booked for months or years and cannot be mobilized even with a few months' notice.

In the field of wind turbines, it is known to use a complex add-on structure that crawls up, hugging a tubular tower, and support themselves on the tower, this structure including crane elements and being able then to lift the nacelle from the ground and into position. But this is yet to be tested with a relatively large turbine, where this crawling crane might be of very large proportion itself.

Additionally, the installation of a nacelle of a wind turbine on a support structure normally requires lifting the nacelle vertically to reach a position where the nacelle is installed to operate in the wind turbine, but it also usually requires a horizontal movement to place the nacelle in its operating position. The increased mass of modern wind turbine nacelles means additional difficulties in ensuring the correct execution of the vertical and horizontal movement manoeuvres and necessarily involves the use of large auxiliary machinery, which makes their availability in wind generation areas difficult, especially in offshore generation areas.

The present invention is intended to provide a system and method for lifting (and subsequently lowering, if necessary) the entire nacelle (or any sub-module of the nacelle) of an onshore wind turbine or offshore floating wind turbine structure, which overcomes the limitations and disadvantages of current systems and does not require a large external crane.

### SUMMARY OF THE INVENTION

The present invention the problem of efficiently and safely handling the installation and maintenance of nacelles in wind turbines.

A first aspect of the invention relates to a nacelle support system for a nacelle of wind turbine. In the context of the present invention, a nacelle may be interpreted as representing the functional element comprising all generating parts (i.e. components) of a wind turbine (e.g. a nacelle may comprise one or more of: a generator submodule, a gearbox submodule, a drive train submodule, and/or brake assembly submodule). The nacelle support system according to the first aspect of the invention comprises: a nacelle support module and a support structure.

The nacelle support module comprises: an open lower portion; an open front portion; a main compartment accessible from the open lower portion (e.g. the open lower portion being preferably configured as an access to the main compartment) and configured to receive a nacelle of a wind turbine through the open lower portion; and a locking system configured to lock the nacelle of the wind turbine in an operative position within the main compartment. The operative position (or operating position) is interpreted as the position in which the nacelle is arranged for generating energy based on the wind received by a plurality of blades configured to be connected to the nacelle. The term front refers to a part of the nacelle support module configured to arrange the blades of the wind turbine (i.e. a part of the nacelle configured to face (e.g. to receive frontally) the wind. In the context of the present invention, a main compartment may be interpreted to refer to a space enclosed or separated from other spaces by walls, partitions, or barriers. In some embodiments, the main compartment may be configured to comprise continuous walls (e.g., the main compartment may be enclosed within one or more walls of the nacelle support module configured to provide weather protection to an inner of the main compartment). However, the definition of a compartment is flexible in the sense that, in certain cases, the enclosed area may be configured as a cage, such as being delimited by discontinuous walls (e.g., defined by bars).

The support structure comprises a base portion and one or more structural elements extending upwards in an at least partially vertical direction from the base portion. The base portion refers to a part of the support structure configured to support the rest of the support structure, and may be configured, depending on the embodiments, as a base configured to be arranged on a portion of land or configured to be arranged floating on water. In any of these two embodiments, each of the one or more structural elements may be configured as an elongated structural element (e.g. such as a leg or a column). The nacelle support system of the first aspect of the invention is compatible with a plurality of configurations for the support structure, such as those described in more detail below.

The nacelle support module is further configured to be connected to an upper part of the one or more structural elements (e.g. of each of the one or more structural elements). Further, the support structure is configured such that, when the nacelle support module is arranged connected to the one or more structural elements, an unobstructed operational space (also referred to as operational space or as unobstructed working area) is provided below the nacelle support module, said operational space being configured to allow a nacelle of a wind turbine to be inserted into and/or removed from the main compartment through the open lower portion. The operational space refers to an empty space available for manoeuvring with the nacelle when entering it into the main compartment or when removing it from the main compartment. The open lower portion of the nacelle support module facilitates a vertical insertion and removal of the wind turbine nacelle, thereby simplifying the installation and maintenance processes.

The concept "in an at least partially vertical direction" refers to the fact that the one or more structural elements may extend vertically upwards and/or may extend at least having a direction having a vertical component and a horizontal component (e.g. such that each of the one or more structural elements may be arranged with an angle of inclination with respect to a vertical direction and/or may be configured to be at least partially curved). Thus, the one or more structural elements may be configured (e.g. shaped) to provide the unobstructed operational space (e.g. in between a plurality of structural elements).

In some embodiments, the nacelle support module may comprise one or more predetermined positions (e.g. a plurality of predetermined positions; wherein the term positions may also be replaced with areas or sections) configured for arranging (e.g. for receiving o placing) one or more lifting elements for lifting at least a part (e.g. the nacelle as a whole or a submodule of the nacelle) of a nacelle of a wind turbine into the main compartment and/or for lowering at least a part (e.g. the nacelle as a whole or a submodule of the nacelle) of a nacelle of a wind turbine out of the main compartment. The term predetermined position refers to a specific predetermined location (e.g. a predetermined area or section) which is configured to accommodate one or more lifting elements (i.e. each predetermined position is configured to receive a lifting element, e.g. a strand jack). Thus, the one or more predetermined positions may also be referred to as one or more predetermined lifting positions or one or more connecting/functional/operational positions/areas/sections for arranging a lifting element.

Preferably, each predetermined position may be arranged in a respective longitudinal position along a longitudinal direction of the main compartment. The longitudinal direction of the main compartment refers to a direction extending horizontally between a rear part and a front part of the main compartment (a direction being aligned with a rotation axis of a generator of a nacelle when arranged in the operative position). A direction being perpendicular to said longitudinal direction (preferably, being arranged on a horizontal plane) is referred in the context of the present invention as a transversal direction. More preferably, each predetermined position may comprise a set of one or more of operative spots (e.g. one, two -i.e. a pair- or more), wherein each operative spot may be configured to arrange (e.g. to accommodate) thereon one of the lifting elements, wherein the operative spots of each set of operative spots may preferably be arranged in parallel to each other (i.e. transversally arranged with respect to the longitudinal direction) in a same longitudinal position (e.g. at least some of the operative spots of a predetermined position may be arranged along the transversal direction in a same longitudinal position) along the longitudinal direction of the main compartment. For example, the one or more predetermined positions may comprise a front predetermined position and one or more rear predetermined positions, wherein preferably the front predetermined position may comprise a set (e.g. two or more) of operative spots arranged parallel to each other in a same front position of the nacelle module (i.e. relative to the longitudinal direction) and/or wherein each rear predetermined position may comprise a respective set (e.g. a pair or a plurality) of operative spots arranged parallel to each other in a same rear longitudinal position. In those embodiments comprising two or more rear predetermined positions, they may be arranged one after the other along the longitudinal direction, wherein each predetermined position may comprise a respective set of one or more operative spots.

The one or more predetermined positions may be arranged above the main compartment. Preferably, the one or more predetermined positions may be arranged on an upper external portion of the nacelle support module (e.g. on an outer surface of the nacelle support module, this outer surface being arranged over a positions of the main compartment) and/or in an auxiliary compartment (optional feature) of the nacelle support module, this auxiliary compartment being arranged above the main compartment. Each predetermined position may be configured as (or comprise) a through-hole configured to be connected to a lifting element, wherein the through-hole may be also configured to allow a cable (e.g. a wire or a strand) to pass through it (e.g. to enter into the main compartment). Having at least some of the predetermined positions on the upper external portion of the nacelle provides an improved accessibility to the predetermined positions, thereby making it easier for arranging the lifting elements thereon. On the other hand, having at least part of the predetermined positions arranged within the optional auxiliary compartment of the nacelle support module provides an additional weather protection to the predetermined positions and to any lifting elements that may be eventually arranged thereon.

In some embodiments, the nacelle support system may further comprise a lifting system comprising one or more lifting elements configured to be arranged in the one or more predetermined positions of the nacelle support module. The one or more lifting elements is also referred to as a lifting system. Preferably, the lifting system (i.e. the one or more lifting elements forming the lifting system) may be configured to be removably connected/arranged on the one or more predetermined positions. This makes it possible to use a single lifting system for operating on a plurality of nacelle support modules, which is particularly advantageous in in the context of an offshore wind farm comprising a plurality of nacelle support modules -e.g. each connected to a respective support structure- and only one lifting system (i.e. to be shared by all the nacelle support modules). The lifting elements of the lifting system may be configured for lifting at least a part (e.g. at least a submodule, also referred to as functional block; e.g. the whole nacelle) of a nacelle of a wind turbine into the main compartment and/or for lowering at least a part (e.g. at least a submodule) of a nacelle of a wind turbine out of the main compartment. Preferably, the lifting system may comprise one or more groups of lifting elements (e.g. each group comprising one, two or more lifting elements), wherein preferably each group of lifting elements may be configured to be connected to a respective set of operative spots of a respective predetermined connecting position (e.g. each group of lifting elements may comprise a number of lifting elements corresponding to the number of operative spots in a set of operative spots of a predetermined connecting position). In preferred embodiments, each set of operative spots may comprise two (e.g. at least one pair) operative spots and each group of lifting elements may comprise two (e.g. at least one pair) lifting elements. In any of the embodiments, the lifting system may be configured as a module comprising a plurality of lifting elements.

In some embodiments, the one or more predetermined lifting positions may comprise (or may be configured as) a plurality of predetermined lifting positions, and the lifting elements (i.e. of the lifting system) may be configured to be movable between different predetermined positions of the plurality of predetermined positions. Preferably, the lifting system may comprise one or more rails configured to allow a displacement of the lifting elements between different predetermined positions of the plurality of predetermined positions.

In preferred embodiments, at least some (preferably all) of the lifting elements of the lifting system may be configured as strand jacks (also referred to as strandjacks), each strand jack comprising a hydraulic cylinder, and a one or more strands (e.g. cables or wires; e.g. made of steel) configured to grip a nacelle of a wind turbine or a part (e.g. a submodule) of a nacelle of a wind turbine for being lifted and/or lowered. The hydraulic cylinder may comprise a first clamping mechanism positioned at a first end of the hydraulic cylinder for selectively gripping the strands, and may also comprise a second clamping mechanism positioned at a second end of the hydraulic cylinder for selectively gripping the strands. The strand jack may comprise a driving element (e.g. a hydraulic pump) connected to the hydraulic cylinder for actuating the hydraulic cylinder to move the first and second clamping mechanisms alternately, thereby lifting or lowering a load attached to the steel strands. The hydraulic cylinder may be configured to create relative movement between the first clamping mechanism and the second clamping mechanism, such that when the first clamping mechanism grips the strands and the hydraulic cylinder extends, the second clamping mechanism releases the steel strands and moves relative to the first clamping mechanism, and vice versa. The use of strand jacks is especially advantageous since they provide a great amount of lifting force while reducing installation complexity (especially when the lifting system is configured to be removably connected to the nacelle support module) and while also reduces spatial requirements.

In some embodiments compatible with any of the preceding embodiments, the nacelle support system may further comprise at least one auxiliary lifting element (preferably configured as a crane) configured to be attached, preferably removably attached, to the nacelle support module. Preferably, the at least one auxiliary lifting element may be further configured: to move the lifting elements of the lifting system between different predetermined lifting positions of the plurality of predetermined lifting positions; and/or to lift the lifting system (e.g. at least one or all the lifting elements, e.g. simultaneously) to the nacelle support module and/or to lower the lifting system of lifting elements from the nacelle support module. Thus, the lifting elements (which may also be referred to as main lifting elements) of the lifting system may be configured to have a higher lifting force than the one or more auxiliary lifting elements.

In a form transversely compatible with any of the preceding embodiments, the nacelle support module may be configured to form a cover surface configured as an upper cover of the main compartment (e.g. configured to provide weather protection to any content of the main compartment). This cover surface (or upper cover) may correspond to the previously described upper external portion of the nacelle support module which may comprise the one or more predetermined positions. In some preferred embodiments, the cover surface may be further configured to extend as a rear cover of the main compartment for protecting a nacelle of a wind turbine when arranged in the operative position within the main compartment. This configuration advantageously eliminates the need for the nacelle of the wind turbine to have its own full cover, since the described configuration of the nacelle support module already provides a cover.

The locking system may comprise a plurality of retractable pins, wherein each pin may be configured to be selectively extended (e.g. the locking system may preferably comprise a plurality of actuators -such as hydraulic or electrical pistons- configured to selectively extend and retract the plurality of retractable pistons; each retractable pin may be integrated into a single device with a respective actuator or each retractable pin may be configured to be actuated by a respective actuator configured as an element being independent from the respective retractable pin) for being inserted into a connecting hole of the nacelle of the wind turbine and preferably also into at least one receiving hole of the nacelle support module for locking the nacelle in the operative position within the main compartment. Preferably, the at least one receiving hole may comprise two receiving holes, each arranged in a corresponding connecting lug (e.g. a connecting surface of the nacelle support module) of the nacelle support module. The two connecting lugs (i.e. connecting surfaces) may be configured such that, when the nacelle of the wind turbine is arranged in the operative position (i.e. within the main compartment), the connecting hole is arranged between the two receiving holes. This allows the respective retractable pin to pass through the two receiving holes and the connecting hole simultaneously to lock the nacelle in the operative position within the main compartment.

The plurality of retractable pins may comprise at least one, preferably at least two, front retractable pins arranged in a front part of the main compartment and at least one, preferably at least two, rear retractable pins arranged in a rearward position with respect to the front retractable pins. Preferably, the front retractable pins and the rear retractable pins may be configured to be extended in opposed directions. For example, the front retractable pins may be configured to be extended towards a front direction (i.e. considering the longitudinal direction of the main compartment) and the rear retractable pins may be configured to be extended towards a rear direction. This configuration provides a highly effective locking effect while ensuring a compacted mass distribution of the locking system, thereby reducing potential negative effects (e.g. undesired vibrations) due to a presence of mass in a part exposed to high wind forces and being arranged at a distance from the base of the support structure.

In some embodiments, the nacelle support system may further comprise a nacelle of a wind turbine configured to be arranged in the operative position within the main compartment of the nacelle support module. The fact that the nacelle is described as configured to be arranged in the operative position may refer to the fact that the nacelle may comprise the necessary element to interact with the nacelle support module (e.g. the nacelle may comprise means/elements configured to interact with the locking system to lock the nacelle in the operative position -e.g. the previously described one or more receiving holes- and/or may comprise means/elements configured to be connected to the one or more lifting elements of the lifting system -e.g. means/elements configured to be gripped by the lifting system, preferably by the strands of the lifting system). Preferably, the nacelle of the wind turbine may be configured as nacelle module which may be configured as a single-body module or wherein said module may comprise a plurality of submodules (e.g. parts) configured to be removably connected to each other as part of module. The plurality of submodules may comprise, for example, a submodule comprising a gearbox and/or a generator (i.e. may comprise a submodule comprising a gearbox and a generator, or may comprise a submodule comprising a gearbox and another submodule comprising a generator) and/or a submodule comprising a hub for connecting a plurality of blades for catching wind energy. Each submodule may be configured to be individually operated by the lifting system, e.g. to be lifted and/or lowered.

The nacelle support system may further comprise a frame structure configured as an interface configured to interact with the locking system of the nacelle support module and/or with the lifting system (if available). Thus, the frame structure may comprise means/elements configured to interact with the locking system (e.g. the one or more previously described receiving holes may be part of the structure frame) such that the locking system is configured to lock the nacelle in the operative position within the main compartment by interacting with the frame structure; and/or may comprise means/elements configured to be connected to a gripping portion of the one or more lifting elements (e.g. these means/elements being preferably configured as respective connectors). The frame structure may be interpreted either as a part of the nacelle support system being independent from the nacelle of the wind turbine (i.e. the frame structure may be regarded as configured to be selectively attached to particular types of nacelles of wind turbines), or as a part of the nacelle of the wind turbine (i.e. this part being configured to be selectively attached to the nacelle of the wind turbine, e.g. to particular types of nacelles). The frame structure provides the advantage of improving the compatibility of the nacelle support system with different types of nacelles. In some cases, the nacelle support system may comprise a plurality of frame structures, each frame structure being configured to be attached to a different type of nacelle of a wind turbine, thereby ensuring the compatibility of the nacelle support system with a broad range of different nacelles for wind turbines.

In those embodiments of the nacelle support system comprising a nacelle of a wind turbine as part of the system, the nacelle may comprise: a lower surface and /or a front surface. The lower surface (e.g. a surface being configured as a bottom/lower part of the nacelle) may be configured to have a shape configured such that, when the nacelle is arranged in the operative position within the main compartment, the lower surface of the nacelle fits by form-fitting with the open lower portion of the nacelle support module, thereby closing a lower part of the nacelle support module (which may also close a lower part of the main compartment). The front surface (e.g. a surface being arranged in a front part of the nacelle support module and configured to be arranged in the open front portion of the nacelle support module when in the operative position) may have a shape configured such that, when the nacelle is arranged in the operative position within the main compartment, the front surface of the nacelle fits by form-fitting with the open front portion of the nacelle support module, thereby closing the front part of the nacelle support module (which may also close the main compartment). Thus, the lower surface may be configured as a closure for the open lower portion of the nacelle support module, and/or the front surface may be configured as closures for the front open portion of the front portion of the nacelle support module (e.g. such that the main compartment may become whether-sealed).

Further, in some embodiments, the nacelle support module (i.e. regardless of whether or not it comprises a nacelle as part of the system) may comprise a lower door configured to selectively close the open lower portion of the nacelle support module to close a lower part of the main compartment. This feature is compatible with having a nacelle with a front surface configured to close the open front portion of the main compartment (i.e. when arranged in the operative position).

In embodiments transversely compatible with any of the preceding embodiments, the one or more structural elements (i.e. of the support structure) may be further configured to extend upwards (e.g. extending at least partially along a vertical direction) from the base portion with an inclination (e.g. describing an angle) towards a front direction, such that when the nacelle support module is connected to the upper part of each structural element, the nacelle support module at least partially overhangs in the front direction with respect to the base portion. In this context, the term overhangs refer to the fact that the nacelle support may be arranged in a more advanced position in the front direction than the base, e.g. such that a vertical projection of the nacelle support module on a geometrical plane where the base may be arranged is arranged in a more advanced position that a front part (i.e. a part being arranged in the more advance position along the front direction) of the base portion. This is advantageous because it allows that a vehicle (e.g. land vehicles, such as trucks, in the case of arranging the support structure on a land portion; or floating vehicles, such as vessels, in the case of arranging the support structure on the water). Thus, in this configuration, the support structure may be configured such that the operating space (also referred to as unobstructed operating space) may be considered to extend from underneath the nacelle support module to a geometric plane on which the base portion of the support structure is arranged or to a geometric plane coincident with a position for receiving the vehicle.

In embodiments compatible with any of the preceding embodiments, the base portion of the support structure may be configured as a floating base configured to be connected to a pre-laid mooring structure such that the support structure is allowed to weathervane relative to the pre-laid mooring structure. Thus, the support structure may be configured as a floating offshore platform configured to be arranged floating over water. Preferably, the one or more structural elements extending upwards from the base portion may comprise (or may be configured as) a plurality of legs, wherein said legs may be configured to be connected to the nacelle support module such that at least part of the unobstructed operational space is arranged between the plurality of legs. More preferably, the plurality of legs may comprise three legs forming a tripod extending from the base portion upwards at least partially along a vertical direction.

In the context of the present invention, a pre-laid mooring structure (also referred to as mooring system or as station keeping system) is interpreted as referring to a system that may comprise a set of anchors, chains, and/or other components that are installed on the seabed prior to the deployment of the floating support structure. This is used, for example, to secure and stabilize floating offshore wind turbines in their designated locations, allowing them to generate electricity efficiently and safely, even in deepwater environments. A non-limiting example of pre-laid mooring structure is represented by tension leg platforms TLP, wherein a plurality of mooring lines (e.g. three or more "tension legs") are tensioned to provide the necessary stability and support for the floating support structure of a wind turbine, thereby the TLP being configured to remain in a static or quasi-static position. Proper tensioning ensures that the turbine (i.e. the weathervaning floating offshore structure over which the wind turbine is installed) remains in its intended position and can withstand the dynamic forces exerted by the marine environment. However, the pre-laid mooring structure is also compatible with other configurations, such as with a catenary configuration.

The term offshore is considered to mean (i.e. is replaceable with) the term marine, while the term weathervane refers to the ability of the structure to orient/rotate (e.g. passively) depending on the wind direction (i.e. the term weathervaning is replaceable with the term orientable/rotatable).

The floating base may be configured as a polygonal (e.g. triangular) floating base comprising a plurality of vertices (e.g. three vertices in the case of the triangular configuration; wherein each vertex may be configured as a column). The floating base may comprise a pivot column configured to be connected to the pre-laid mooring structure such that the nacelle support system is enabled to rotate about a vertical axis of the pivot column.

In some embodiments, the floating base may be configured such that a receiving space for a vessel (e.g. a vessel carrying a nacelle of a wind turbine) is provided below the nacelle support module. This receiving space may be configured as part of the unobstructed operational space. Preferably, the floating base may be configured such that at least a part of the floating base is configured to be under a water level such that a vessel is allowed to have access to the receiving space; and/or the floating base may comprise a buoyancy adjustment system (e.g. a ballast adjustment system) configured to regulate the floatability of the floating base.

Thus, the floating base may be configured as a polygonal floating base (e.g. a triangular base) comprising a plurality of lateral structural segment (e.g. connecting adjacent vertices of the polygonal floating base; e.g. the plurality comprising at least two lateral structural segments) configured to be at least partially over a water level, and a front structural segment configured to be submerged under water. Preferably, the front structural segment may be configured to have a shorter height (i.e. extension along a vertical direction) than the lateral structural segments, this shorter height being selected to ensure that the front segment remains underwater. In some embodiments, the plurality of lateral structural segments may comprise structural walls configured to extend at least partially over water, while preferably the front structural segment may be deprived from any structural wall, thereby providing the receiving space for allowing a vessel to be arranged below the nacelle support module.

In some embodiments comprising the buoyancy adjustment system, this system may be configured to adjust the floatability of the support structure top selectively cause a submersion of the front structural segment, thereby selectively providing a receiving space for allowing a vessel to be arranged below the nacelle support module. Further, the buoyancy adjustment system may (alternatively or complementarily) be configured to act in coordination with the lifting system such that, when a heavy component (e.g. a nacelle or a nacelle submodule) is first lifted from the ground of from a vessel, the lifting system may be activated to lift the heavy component to a point that an initial load is obtained, and then the buoyancy adjustment system may be activated to start deballasting the platform (e.g. increasing the buoyancy of the platform) such that the load is slowly lifted reducing the risk of sudden heaving or pitching motion of the floating support structure.

In preferred embodiments, the support structure may comprise a connecting system configured to be connected to a vessel to reduce a relative movement of the vessel with respect to the support structure. The connecting system may comprise a plurality of cables configured to be connected to the vessel to provide a tensioning force between the support structure and the vessel. Preferably, the connecting system may comprise at least two cables (e.g. configured to be connected to different vertices of the base portion), each cable being configured to provide a tensioning force from one of the two lateral sides of the vessel (e.g. towards the respective vertex to which the cable is connected). In preferred embodiments, the connecting system may comprise two cables configured to connect two different points of a first side/lateral of a vessel to the support structure (e.g. to a first vertex of the support structure) and may further comprise two cables configured to connect two different points of a second side/lateral of the vessel to the support structure (e.g. to a second vertex of the support structure). The connecting system is broadly compatible with any embodiment of the support structure configured to have a floating base.

A second aspect of the invention refers to a method for operating the nacelle support system of the first aspect of the invention to support a nacelle of a wind turbine. The method for carrying at least a part of a nacelle (e.g. a full nacelle or a submodule of the nacelle) of a wind turbine with a nacelle support system according to any of the preceding embodiments comprises:
a) arranging one or more lifting elements (e.g. of a lifting system) onto at least one of the predetermined lifting positions of the nacelle support module;
b) connecting the one or more lifting elements (e.g. respective gripping portions of one or more cables of the lifting elements) to a nacelle of a wind turbine;
c) arranging a vehicle (e.g. a vessel in the case of offshore applications or a truck in the case of onshore applications) configured to carry a nacelle of a wind turbine within the unobstructed operational space provided by the support structure; and
   wherein the method further comprises:
d) if the nacelle of the wind turbine is initially arranged on the vehicle, then lifting the nacelle from the vehicle up into the main compartment of the nacelle support module by means of the lifting elements, and then locking the nacelle in the operative position by means of the locking system; and/or
e) if the nacelle of the wind turbine is initially arranged within the main compartment locked in the operative position by the locking system, then connecting the one or more lifting elements (e.g. respective gripping portions of one or more cables of the lifting elements) to the nacelle, then actuating the locking system to unlock the nacelle, and then lowering the nacelle from the main compartment down onto the vehicle.

The method of the second aspect is also applicable/adaptable for lift and lower a part of a nacelle of a wind turbine, such as a submodule of the nacelle (e.g. a submodule comprising a gearbox and/or a generator).

### BRIEF DESCRIPTION OF THE DRAWINGS

Figs. 1A-1B depict respectively a general isometric view of and a lateral view of a nacelle support system 1 according to embodiments of the invention.
Figs. 2A-2D show detailed views of a nacelle support module 3 compatible with the nacelle support system 1 of Figs. 1A-1B.
Figs. 3A-3C depict different views of a nacelle support module 3 compatible with the embodiments of the preceding figures carrying out an operation of lifting or lowering a submodule 21 of a nacelle 2 of a wind turbine.
Fig. 4 shows a nacelle support module 3 comprising an auxiliary lifting element 6.
Figs. 5A-5D depict four detailed views of a locking system 33 of a nacelle support module 3 compatible with the nacelle support system 1 of the first aspect of the invention.
Figs. 6A-6B show two different lateral views of the nacelle support system 1 shown in Figs. 1A-1B.
Figs. 7A-7D depict four views of a nacelle support system 1 having an alternative configuration for the base 40 of the support structure 4.

### DETAILED DESCRIPTION OF THE DRAWINGS

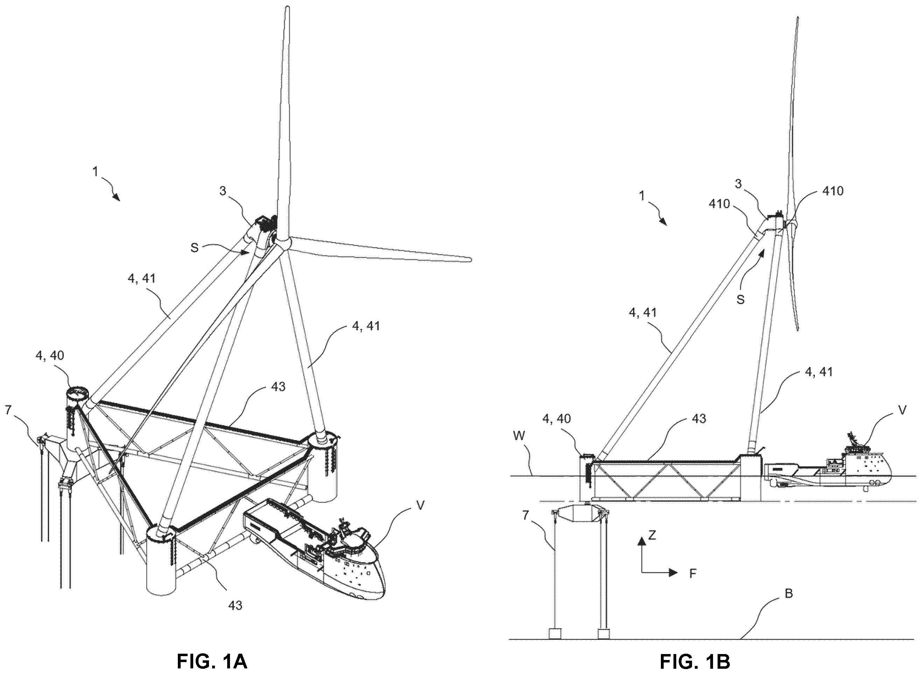

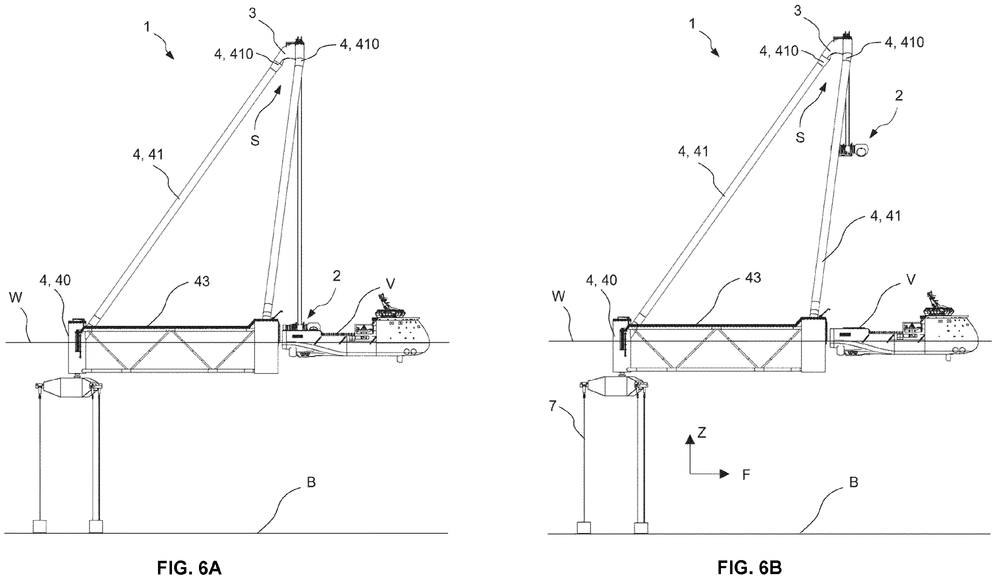

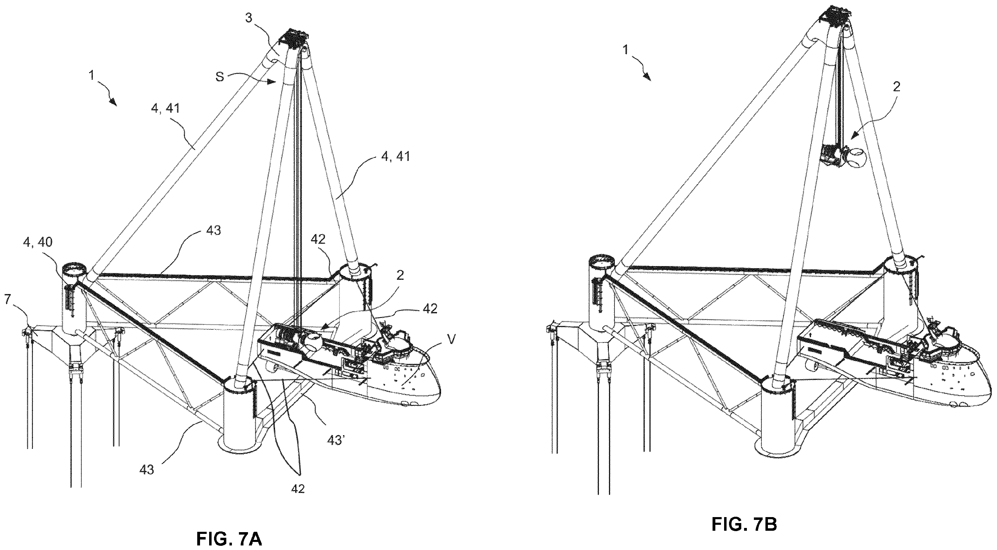

Figs. 1A shows a general isometric view of nacelle support system 1 according to some embodiments of the invention. The nacelle support system 1 for a nacelle 2 of a wind turbine shown in Fig. 1A comprises: a nacelle support module 3 and a support structure 4. Fig. 1B represents a lateral view of the same nacelle support module 1. The support structure 4 of Figs. 1A-1B is represented configured as a floating support structure (e.g. for offshore applications) which is further described in more detail in Figs. 6A-6B. However, the nacelle support system 1 of the invention is also compatible with other floating configurations for the support structure 4, such as the one depicted in Figs. 7A-7D, and also with other configurations intended to be arranged on a portion of land (e.g. for onshore applications).

The support structure 4 comprises a base portion 40 and one or more structural elements 41 extending upwards in an at least partially vertical direction Z from the base portion 40. The base portion 40 shown in Figs. 1A-1B is optionally configured as a floating base 40 configured to be arranged floating on water W. In Fings. 1A-1B, the one or more structural elements 41 are configured as a plurality of elongated structural elements 41, more particularly forming an optional tripod configuration.

The nacelle support module 3 is further configured to be connected to an upper part 410 of the structural elements 41. Further, the support structure 4 (the one or more structural elements 41) is configured such that, when the nacelle support module 3 is arranged connected to the structural elements 41 (e.g. to the respective upper parts 410), an unobstructed operational space S (also referred to as operational space S) is provided below the nacelle support module 3, said operational space 3 being configured to allow a nacelle 2 of a wind turbine to be inserted into and/or removed from the main compartment 32 through the open lower portion 30. The unobstructed operational space S may be configured as a space (e.g. a columnar or conical space) extending from below the nacelle support module 3 to a horizontal geometrical plane coincident with the base portion 40 (as shown in Figs. 1A and 1B).

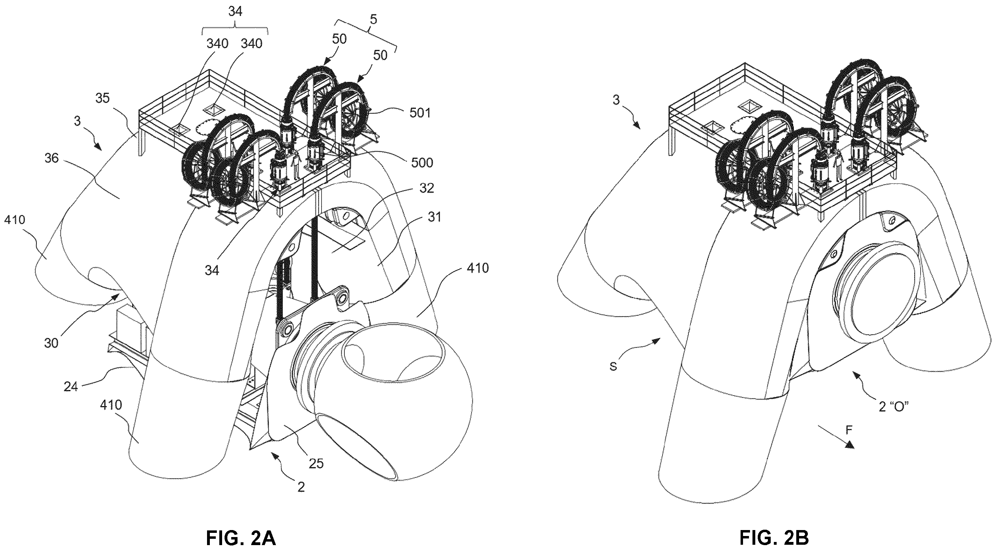

Figs. 2A-2D show detailed views of a nacelle support module 3 compatible with the nacelle support system 1 of Figs. 1A-1B. The nacelle support module 3 comprises: an open lower portion 30; an open front portion 31; a main compartment 32 accessible from the open lower portion 30 (e.g. the open lower portion 30 being preferably configured as an access to the main compartment 32) and configured to receive a nacelle 2 of a wind turbine through the open lower portion 30; and a locking system 33 configured to lock the nacelle 2 of the wind turbine in an operative position "O" within the main compartment 32. Although the nacelle 2 is not an essential part of the invention (as in some embodiments the nacelle 2 may be external to the invention), in some embodiments the nacelle 2 may be integrated as a part of the nacelle support system 1.

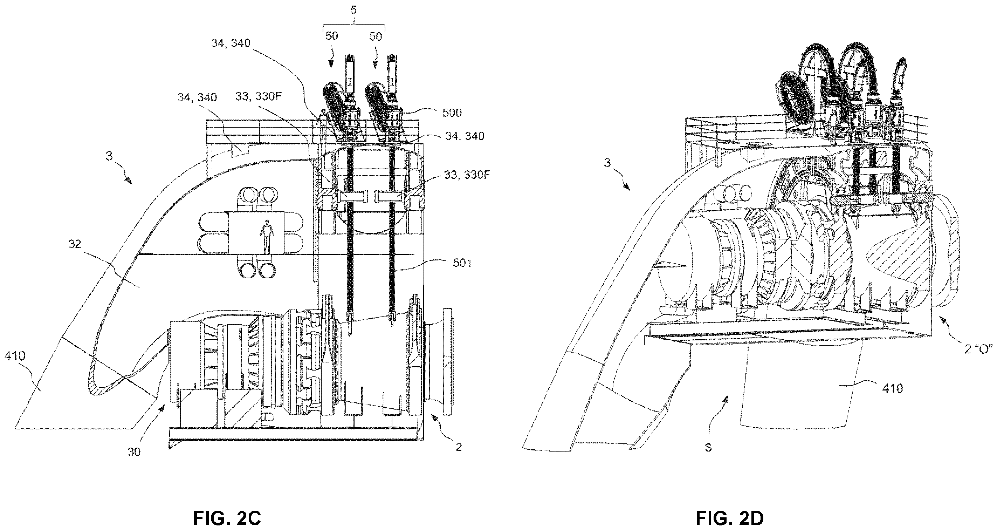

Fig. 2A represents an isometric view of the nacelle support module 3 with a nacelle 2 of a wind turbine being carried by a lifting system 5 out of the main compartment 32 (e.g. the nacelle 2 being raised into the main compartment 32 or being lowered from the main compartment). The same configuration is represented in Fig. 2C as a sectional view. On the other hand, Fig. 2B shows the nacelle support module 3 having a nacelle 2 of a wind turbine arranged and locked in the operating position "O" within the main compartment 32. Fig. 2D represents a sectional view of this same configuration.

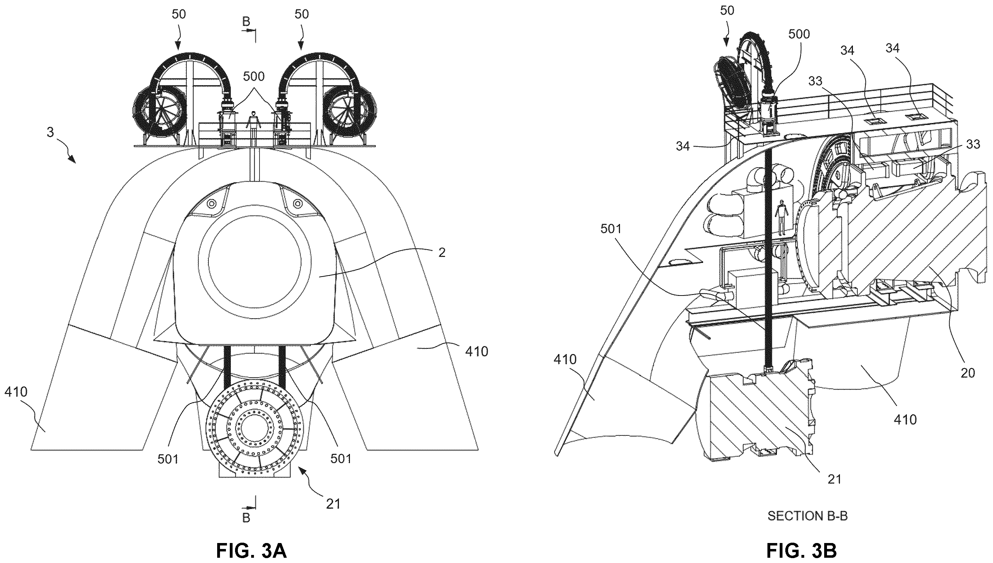

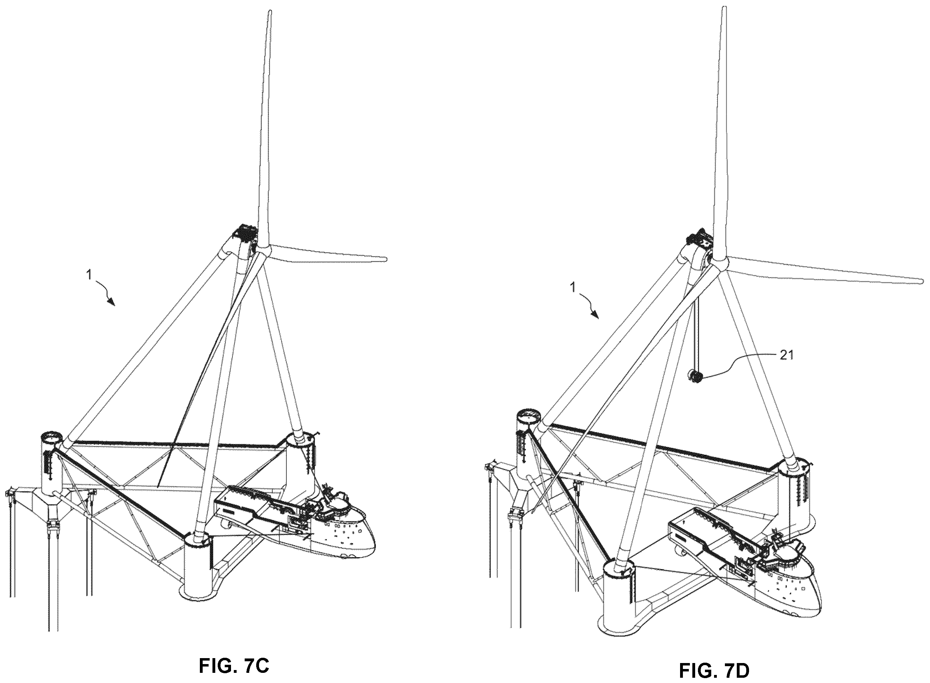

In Figs. 2A-2D, the nacelle support module 3 comprises one or more predetermined positions 34 (optional feature) configured for arranging one or more lifting elements 50 of a lifting system 5 for lifting at least a part (e.g. the nacelle 2 as a whole or a submodule 20, 21 -as shown in Figs. 3A-3C and 7D- of the nacelle 2) of a nacelle 2 of a wind turbine into the main compartment 32 and/or for lowering at least a part (e.g. the nacelle 2 as a whole or a submodule 20, 21 -as shown in Figs. 3A-3C and 7D- of the nacelle 2) of a nacelle 2 of a wind turbine out of the main compartment 32.

Figs. 2A-2D shown the preferred but optional configuration in which each predetermined positions 34 is distributed in Figs. 2A-2D in a respective longitudinal position along a longitudinal direction F of the main compartment 32 (indicated in Fig. 2B). Further, Figs. 2A-2D show the optional configuration in which each predetermined position 34 comprises a set of operative spots 340 (the set of operative spots 340 shows the preferred and optional configuration in which it comprises comprising a pair of operative spots 340), wherein each operative spot 340. Each operative spot 340 is configured to arrange (e.g. to accommodate) thereon one of the lifting elements 50 of the lifting system 5. In this regard, it should be noted that Figs. 2A-2D shown three predetermined positions 34: a rear predetermined position 34 no having any lifting elements 50 connected thereto, a front predetermined position 34 (indicated in Fig. 2C) shown as having two lifting elements 50 connected thereto, and an intermediate predetermined position (indicated in Fig. 2C) arranged in between the two front and rear predetermined positions.

The operative spots 340 of each set of operative spots 340 are represented in parallel (optional feature) to each other (i.e. when considering a same longitudinal position along the longitudinal direction F of the main compartment 32, the two respective operative spots 340 are transversally arranged to the longitudinal direction F). It should be noted that Figs. 2A-2D show an exemplary embodiment, but the invention is compatible with other arrangements for the predetermined positions 34, for example: the one or more predetermined positions 34 may comprise a front predetermined position 34 and one or more rear predetermined positions 34 (an intermediate position may correspond to a rear position in the sense that it is arranged behind the front position). In those embodiments comprising two or more rear predetermined positions 34, they may be arranged one after the other along the longitudinal direction F. The front predetermined position 34 and the intermediate predetermined position 34 may be configured to arranged thereon one or more lifting elements for lifting and/or lowering the nacelle 2 as a whole or a front submodule 20 of the nacelle 2 (as shown in Figs. 2A-2D). Preferably, the rear predetermined position 34 (i.e. the rearmost predetermined position 34) may be configured to arrange one or more lifting elements 50 thereon for lifting and/or lowering a submodule 21 (a rear submodule 21) of the nacelle 2 of the wind turbine (this configuration is shown in more detail in Figs. 3A-3C).

Figs. 2A-2D show the optional configuration in which the one or more predetermined positions 34 are arranged above the main compartment 32 (e.g. on an upper external portion 35 of the nacelle support module 3. However, in other compatible embodiments, the one or more predetermined positions 34 may be arranged in an auxiliary compartment (optional feature not shown in the figures) of the nacelle support module 3, this auxiliary compartment being arranged above the main compartment 32. The auxiliary compartment may be configured to provide weather protection to the one or more predetermined positions 34.

Although not visible in the figures, each predetermined position 34 may be configured as a through-hole (e.g. a through hole leading to an upper part of the main compartment 32) configured to be connected to a lifting element 50, wherein the through-hole may be also configured to allow a cable 501 (e.g. a wire or a strand) to pass through it (e.g. to enter into the main compartment 32).

The lifting system 5 shown in Figs. 2A-2D may be configured as a part of the nacelle support system 1 or may be configured as a part being external to the system 1 (e.g. the one or more predetermined positions 34 may be configured to arranged thereto a respective lifting system 5 external to the nacelle support module 3). In those embodiments in which the lifting system 5 (i.e. the one or more lifting elements 50) are comprised by the nacelle support system 1, the one or more lifting elements 50 of the lifting system 50 are configured to be arranged in the one or more predetermined positions 34 of the nacelle support module 3. Preferably, the lifting system 5 (i.e. the one or more lifting elements 50 forming the lifting system 5) may be configured to be removably connected/arranged on the one or more predetermined positions 34. The lifting elements 50 of the lifting system may be configured for lifting at least a part (e.g. at least a submodule 20, 21; e.g. the nacelle 2 as a whole) of a nacelle 2 of a wind turbine into the main compartment 32 and/or for lowering at least a part (e.g. at least a submodule 20, 21) of a nacelle 2 of a wind turbine out of the main compartment 32.

Figs. 2A-2E show the one or more lifting elements 50 of the lifting system configured as respective strand jacks, which is a preferred optional configuration for the lifting elements 50. In particular, at least some (preferably all) of the lifting elements 50 of the lifting system 5 may be configured as strand jacks 50. Each strand jack comprises a hydraulic cylinder 500, and a one or more strands 501 (e.g. cables or wires) configured to grip a nacelle 2 of a wind turbine or a part (e.g. a submodule 20, 21) of a nacelle 2 of a wind turbine for being lifted and/or lowered. The hydraulic cylinder 500 may comprise a first clamping mechanism positioned at a first end of the hydraulic cylinder for selectively gripping the strands, and may also comprise a second clamping mechanism positioned at a second end of the hydraulic cylinder for selectively gripping the strands. The strand jack may also a driving element (e.g. a hydraulic pump) connected to the hydraulic cylinder for actuating the hydraulic cylinder to move the first and second clamping mechanisms alternately, thereby lifting or lowering a load attached to the steel strands.

Figs. 2A-2D show the optional configuration in which the lifting system comprises one or more groups (each group being depicted as a pair of lifting elements 50, which is an optional feature of the invention) of lifting elements 50 (e.g. two pairs), each group of lifting elements 50 being configured to be connected to one of the predetermined positions 34 (e.g. to the respective set of operative spots 340 of the respective predetermined connecting position 34). Thus, each group of lifting elements 50 may comprise a number of lifting elements 50 corresponding to a number of operative spots 340 in a set of operative spots 340 of a predetermined connecting position 34. Figs. 2A-2D shown the optional configuration in which all group of lifting elements 50 comprises a same number of lifting elements (two, although in other embodiments the number may be different), and in which all sets of operative spots 340 comprise a same number of operative spots 340, the number of lifting elements 51 of each group being equal to the number of operative spots 340 in each set of operative spots 340. Although not shown in the figures, the lifting system 5 may optionally be configured as a module (e.g. as a modular block) comprising a plurality of lifting elements 50.

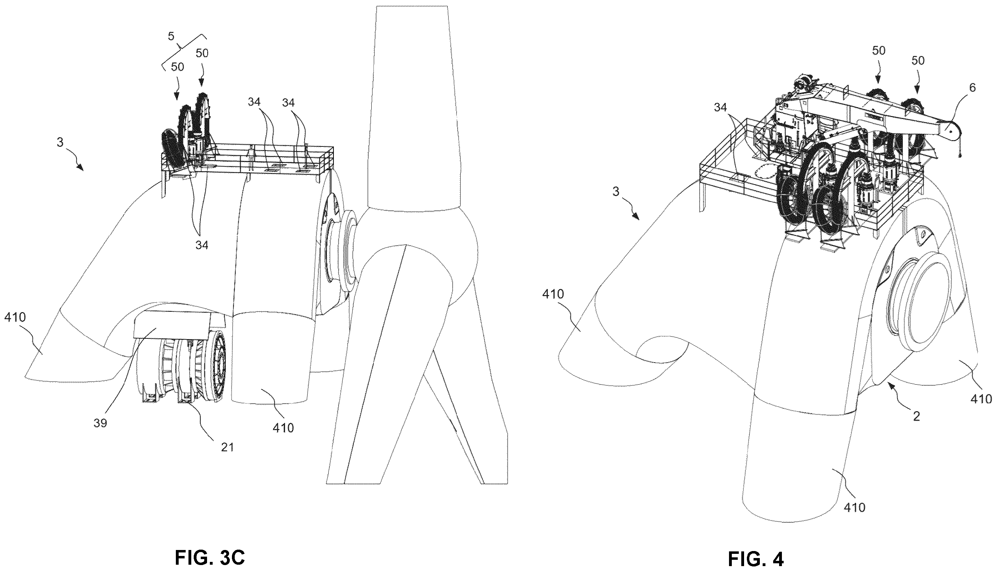

Figs. 2A-2E depict the nacelle support module 3 as comprising a plurality of predetermined lifting positions 34. The lifting elements 50 (i.e. of the lifting system) may be configured to be movable between different predetermined positions 32 of the plurality of predetermined positions 32. In other words, the lifting elements 50 may be configured to be selectively arranged in one of the predetermined positions 34 and then be movable to another of the predetermined positions 34. Although not shown in the figures, in some embodiments compatible with the disclosure of Figs. 2A-2D, the lifting system 5 may further comprise one or more rails configured to allow the lifting elements to be displaced along the one or more rails between different predetermined positions 34. Alternatively or complementarily to the one or more rails, the nacelle support system 1 may further comprise at least one auxiliary lifting element 6 (represented in Fig. 4) configured to be attached (preferably removably attached) to the nacelle support module. Preferably, the at least one auxiliary lifting element 6 may be further configured: to move the lifting elements 50 of the lifting system 5 between different predetermined lifting positions 34 of the plurality of predetermined lifting positions 34 (e.g. from a front predetermined position 34 to a rear predetermined position 34 or vice versa); and/or to lift the lifting system (e.g.at least one or all the lifting elements 50) to the nacelle support module 3 and/or to lower the lifting system 5 of lifting elements 50 from the nacelle support module 3 downwards (e.g. to arrange the lifting system on a vehicle V). The lifting elements 50 (which may also be referred to as main lifting elements 50) of the lifting system 5 are preferably configured to have a higher lifting force than the one or more auxiliary lifting elements.

In Fig. 2A, the nacelle support module 3 is configured to form a cover surface (optional feature) configured as an upper cover of the main compartment 32. This cover surface 36 (or upper cover) comprises the previously described upper external portion 35 of the nacelle support module 3 (i.e. where the one or more predetermined positions are arranged in Figs. 2A-2E). Further, the cover surface 36 is further represented (optional feature) configured to extend as a rear cover (see Figs. 2C and 2D) of the main compartment 32 for protecting a nacelle 2 of a wind turbine when arranged in the operative position "O" within the main compartment 32. Thus, the nacelle support module 3 may be configured to provide weather protection to an upper portion and a rear portion of the nacelle 2 when arranged within the main compartment 32.

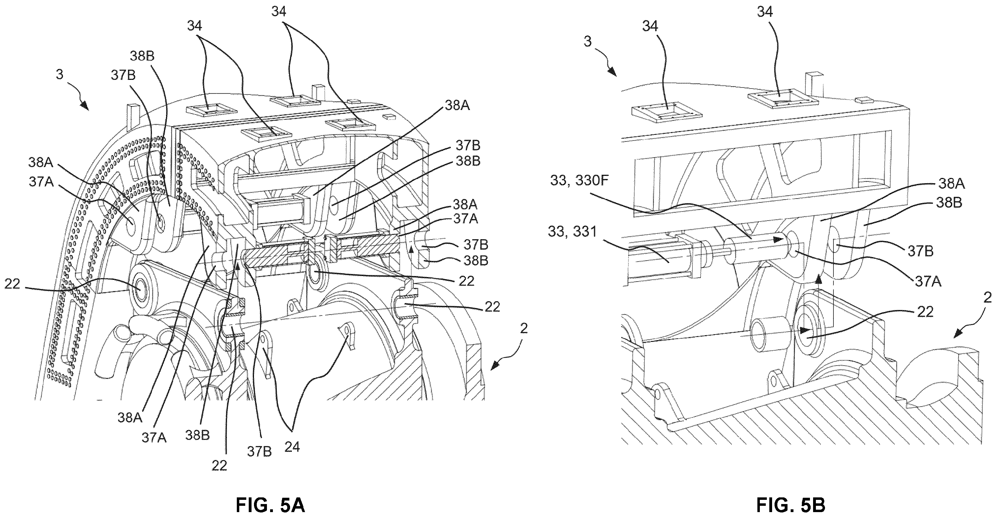

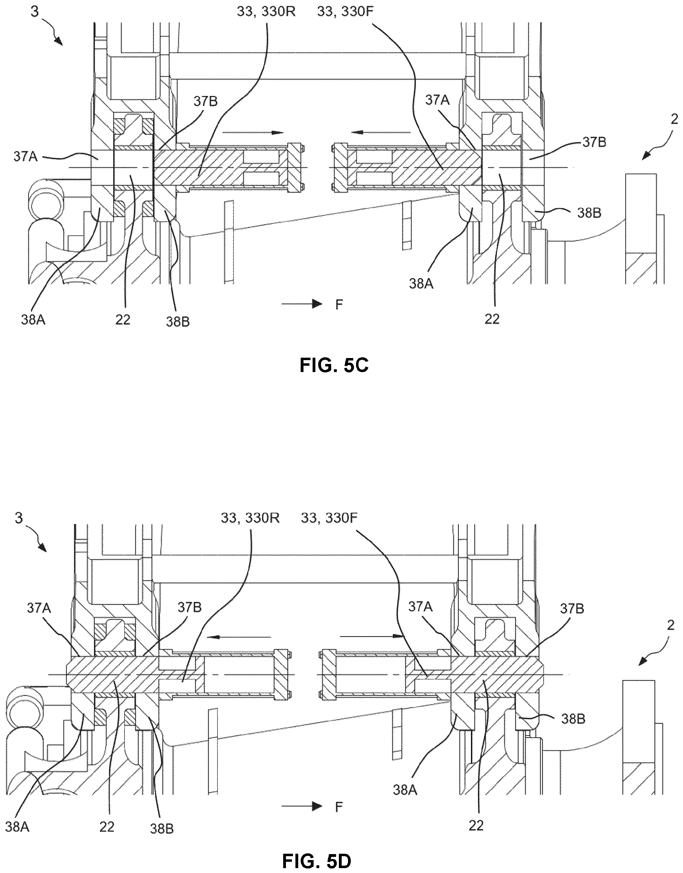

Figs. 2C-2D schematically represents a preferred configuration for the locking system 33, which is represented in more detail in Figs. 5A-5B, and which comprises a plurality of retractable pins 330F, 330R for locking the nacelle 2 of the wind turbine in the operative position "O" withing the main compartment 32.

Figs. 3A-3C depict different views of a nacelle support module 3 (compatible with the embodiments of the preceding figures) carrying out an operation of lifting or lowering a submodule 21 (e.g. a submodule comprising a gearbox and/or a generator) of a nacelle 2 of a wind turbine. Fig. 3A represents a front view, Fig. 3B represents a sectional view and Fig. 3C represents a lateral view of the nacelle support module 3. Figs. 3A-3C show the same nacelle support module 33 of Figs. 2A-2D, but in this case showing the lifting elements 50 (in this case only two lifting elements 50) arranged in the rear predetermined position 34 to carry a rear submodule 21 (e.g. a submodule comprising a gearbox and/or a generator) of the nacelle 2 of the wind turbine. The lifting elements 50 shown in Figs. 3A-3C may be configured to be movable between the plurality of predetermined positions 34 shown in Figs. 3A-3C (which are exemplary represented as three optional predetermined positions 34, each preferably comprising a respective set of two (although in compatible embodiments each set may comprise one, two, three or more operative spots) of operative spots 340). Fig. 3C shown blades (not being part of the invention) of the wind turbine conveniently connected to the front portion (e.g. a front hub) of the nacelle 2, thereby exemplifying that the system 1 allows a selective replacement of a part of the nacelle 2, without requiring carrying the full system 1 to a port and/or having to remove the whole nacelle 2 from the nacelle support module 3.

Fig. 3C shows an optional lower door 39 configured to selectively close the lower portion 30 of the main compartment 32. This optional lower door may be configured as part of the nacelle 2 of the wind turbine (e.g. for allowing a submodule 21 to be removed from the main compartment 32) or may be configured as part of the nacelle support module 3.

Fig. 4 shows a nacelle support module 3 compatible with that of Figs. 2A-2D, but further comprising an auxiliary lifting element 6. This configuration has already been defined as an optional feature of the nacelle support module 3 shown in Figs. 2A-2D. The at least one auxiliary lifting element 6 may be configured as crane having a mechanical arm comprising means for gripping the lifting elements 50 of the lifting system. The auxiliary lifting element 6 may be configured such that the mechanical arm is configured to rotate around vertical axis (e.g. a vertical axis of the base of the auxiliary lifting element 6, this base corresponding to a part of the auxiliary lifting element 6 being attached to the nacelle support module 3) and/or may be configured such that the mechanical arm is configured to be selectively tilted for reaching the plurality of predetermined positions 34. For example, the auxiliary lifting element may be configured to move two of the lifting elements 50 shown in Fig. 4 from their original predetermined positions 34 to the rearmost predetermined position 34 (as shown in Figs. 3A-3C).

The locking system 33 schematically shown in Figs. 2C-2D is shown in more detail in Figs. 5A-5D. The locking system 33 comprises a plurality of retractable pins 330F, 330R, wherein each pin 330F, 330R is configured to be selectively extended (Fig. 5D represents a lateral view two pins 330F, 330R arranged in their extended positions) for being inserted into a respective connecting hole 22 of the nacelle 2 of the wind turbine and also into a respective at least one receiving hole 37A, 37B of the nacelle support module 3 for locking the nacelle 2 in the operative position "O" within the main compartment 32. Fig. 5B show the optional configuration in which each retractable pin 330F, 330R is part of a device (e.g. a locking device) comprising a piston actuator 331 (e.g. a hydraulic or an electrical piston) configured to selectively extend/retract -depending on the case- the respective retractable pin 330F, 330R. In other compatible embodiments, the pistons may be configured as elements being independent (e.g. separate elements) from the retractable pins 330F, 330R. Further, each retractable pin 330 is also configured to be selectively retracted such that the respective retractable pin 330 is arranged out of the respective connecting hole 22 of the nacelle 2 of the wind turbine, thereby unlocking the nacelle 2 from the nacelle support module 2, thereby enabling the nacelle 2 to be moved away from the operating position (e.g. for lowering the nacelle 2 by means of the lifting system 5).Thus, for each retractable pins 330F, 330R, the nacelle support module comprises at least one receiving hole 37A, 37B configured to receive the respective retractable pin 330F, 330R. Further, each retractable pin 330F, 330R is configured to be inserted into a respective connecting hole 22 of the nacelle 2 of the wind turbine (wherein, as previously discussed, in some embodiments the nacelle 2 may be part of the nacelle support system 1, but in other embodiments the nacelle 2 may be configured as an element being external to the nacelle support system 1).

Figs. 5A-5D represent the preferred embodiment in which each at least one receiving hole 37A, 37B comprises two receiving holes 37A, 37B, each arranged in a corresponding connecting lug 38A, 38B of the nacelle support module 3. The respective two connecting lugs 38A, 38B are configured such that, when the nacelle 2 of the wind turbine is arranged in the operative position "O" (i.e. within the main compartment 32), the respective connecting hole 22 is arranged between the two receiving holes 37A, 37B. This allows the respective retractable pin 330 to pass through the two receiving holes 37A, 37B and the connecting hole 22 simultaneously to lock the nacelle 2 in the operative position "O" within the main compartment 32.

The plurality of retractable pins 330 shown in Figs. 5A-5D is represented as comprising two front pins 330F (i.e. arranged in a front part of the nacelle support module 3) and two rear pins 330R (i.e. arranged in a rearward position with respect to the front retractable pins 330F when considering the longitudinal direction F of the main compartment 32), wherein the two front pins 330F are arranged parallel to each other and the two rear pins 330R are also arranged parallel to each other. However, in other embodiments of the invention the plurality of retractable pins 330F, 330F may comprise at least one, preferably at least two, front retractable pins 330F and at least one, preferably at least two, rear retractable pins 330R in a rearward position with respect to the front retractable pins.

The front retractable pins 330F and the rear retractable pins 330R shown in Figs. 5A-5D are represented in the optional configuration in which the front 330F and the rear 330R retractable pins are configured to be extended in opposed directions. Figs. 5A-5D shown the preferred configuration in which the front retractable pins 330F are configured to be extended towards a front direction F (i.e. considering the longitudinal direction F of the main compartment 32) and the rear retractable pins 330R are configured to be extended towards a rear direction (i.e. a direction opposed to the front direction F). Although this particular arrangement has demonstrated to be very effective, in other embodiments the rear retractable pins 330R may be configured to extend towards a front direction F and the front retractable pins 330F may be configured to extend towards a rear direction.

Although not shown in the figures, the nacelle support system 3 of any of the exemplary embodiments depicted in the figures may further comprise a frame structure configured as an interface configured to interact with the locking system 33 of the nacelle support module 3 and/or with the lifting system 5 (if available). The frame structure may comprise means/elements configured to interact with the locking system 5 such that the locking system 5 is configured to lock the nacelle 2 in the operative position "O" within the main compartment 32 by interacting with the frame structure; and/or may comprise means/elements configured to be connected to a gripping portion of the one or more lifting elements 50. The frame structure may be interpreted either as a part of the nacelle support system 1 being independent from the nacelle 2 of the wind turbine, or as a part of the nacelle 2 of the wind turbine (i.e. this part being configured to be selectively attached to the nacelle 2 of the wind turbine, e.g. to particular types of nacelles 2).

In those embodiments of the nacelle support system 1 comprising a nacelle 2 of a wind turbine as part of the system 1, the nacelle 2 may comprise (as represented in Fig. 2A): a lower surface 24 and/or a front surface 25. The lower surface 24 (e.g. a surface being configured as a bottom/lower part of the nacelle 2) may be configured to have a shape configured such that, when the nacelle 2 is arranged in the operative position "O" within the main compartment 32, the lower surface 24 of the nacelle 2 fits by form-fitting with the open lower portion 30 of the nacelle support module 3, thereby closing a lower part of the nacelle support module 3 (which may also close a lower part of the main compartment 32). The front surface 25 may have a shape configured such that, when the nacelle is arranged in the operative position "O" within the main compartment 32, the front surface 25 of the nacelle 2 fits by form-fitting with the open front portion 31 of the nacelle support module 3, thereby closing the front part 31 of the nacelle support module 3 (which may also close a front part of the main compartment 32). Thus, the lower surface and the front surface may be configured to close the main compartment such that the main compartment becomes weather protected.

In embodiments transversely compatible with the embodiments described in any of the preceding figures, the one or more structural elements 41 (i.e. of the support structure 4) may be further configured to extend upwards (e.g. extending at least partially along a vertical direction Z) from the base portion 40 with an inclination (e.g. describing an angle) towards a front direction F, such that when the nacelle support module 3 is connected to the upper part 410 of each structural element 41, the nacelle support module 3 at least partially overhangs in the front direction F with respect to the base portion 40 (this in an optional feature of the support structure 4). This configuration is shown in Figs. 1A-1B and Figs. 6A-6B (wherein Figs. 6A 6B represent a lateral view of the system 1 shown in Figs. 1A-1B representing a lifting sequence of a nacelle 2 from a vessel towards the nacelle support module 3). Therefore, in this embodiment, the nacelle support 3 is configured to be arranged in a more advanced/forward position in the front direction F (i.e. along the front direction F) than the base 40.

This configuration of Figs. 1A-1B and Figs. 6A-6B allows that a vehicle (e.g. a floating vehicle, such as a vessel, in the case of arranging the support structure on the water, or as a land vehicle, such as trucks, in the case of arranging the support structure on a land portion). Thus, in this configuration, the support structure 4 is configured (e.g. with an angle of inclination forward) such that the operating space S (also referred to as unobstructed operating space S) extends from underneath the nacelle support module 3 to a location (also referred to as receiving space) intended to receive a vehicle below the nacelle support module 3 (which may be arranged above a geometric plane on which the base portion of the support structure is arranged.

In the embodiment depicted in Figs. 1A-1B and 6A-6B and in the embodiment depicted in Figs. 7A-7D, the base portion 40 of the support structure 4 is configured (optional feature) as a floating base 40 configured to be connected to a pre-laid mooring structure 7 such that the support structure 4 (and therefore the whole nacelle support system 1) is allowed to weathervane relative to the pre-laid mooring structure 7 . Thus, the support structure 4 may be configured as a floating offshore platform configured to be arranged floating over water W.

The structural elements 41 of the embodiment of Figs. 1A-1B and 6A-6B and of the embodiment of Figs. 7A-7D comprise a plurality of legs 41, wherein said legs 41 are configured to be connected to the nacelle support module such that at least part of the unobstructed operational space S is arranged between the plurality of legs. Figs. 1A-1B and 6A-6B show preferred configurations in which the plurality of legs 41 specifically comprises three legs forming a tripod extending from the base portion 40 upwards at least partially along a vertical direction Z.

Further, the floating bases 40 shown in the embodiment of Figs. 1A-1B and 6A-6B and in the embodiment of Figs. 7A-7D are respectively configured according to a preferred and optional configuration in which the base 40 is configured (e.g. shaped or geometrically configured) such that a receiving space for a vessel V (e.g. a vessel V suitable for carrying a nacelle 2 of a wind turbine) is provided below the nacelle support module 2. This receiving space may be configured as part of the unobstructed operational space S or as a continuation/prolongation of the unobstructed operational space S. The receiving space corresponds to an empty/unobstructed space configured to receive a vessel V.

The receiving space for a vessel V may be provided by configuring the support structure 4 with an angle of forward inclination as that shown in Figs. 1A-1B and Figs. 6A-6B, but may also be obtained by configuring a part of the support structure 4 to be under a water level W as shown in the embodiment of Figs. 7A-7D.

In this regard, Figs. 7A-7D show the optional configuration in which the floating base 40 is configured such that at least a part of the floating base 40 is configured to be under a water level W such that a vessel is allowed to be positioned below the nacelle support module 3 (e.g. in a receiving space).

Although not shown in the figures, any of the embodiments comprising a base portion 40 configured as a floating base 40, the floating base 40 may further comprise a buoyancy adjustment system (e.g. a ballast adjustment system) configured to selectively regulate a floatability of the floating base 40.

The floating base 40 depicted in Figs. 1A-1B and 6A-6B and the floating base 40 shown in Figs. 7A-7D are configured as respective polygonal floating bases 40 (optionally depicted as a triangular base) comprising a plurality of lateral structural segment 43 (e.g. connecting adjacent vertices of the polygonal floating base 40, wherein each vertex is represented as a column) configured to be at least partially over a water level W, and a front structural segment 43' configured to be submerged under water W. The front structural segment 43' of Figs. 7A-7D is optionally configured to have a shorter height (i.e. extension along the vertical direction Z) than the lateral structural segments 43, this shorter height being selected to ensure that the front segment 43'remains underwater. In some embodiments, the plurality of lateral structural segments may comprise structural walls (e.g. as the multi-tubular walls depicted in the figures) configured to extend at least partially over water W. In Figs. 7A-7D the front structural segment 43' is shown (optional feature) as deprived from any structural wall, thereby providing the receiving space for allowing a vessel V to be arranged below the nacelle support module 3.

In the embodiment of Figs. 1A-1B and 6A-6B and in the embodiment of Figs. 7A-7D, the base portion 40 is configured to be connected to the pre-laid mooring structure 7 by means of one of the vertices of the base portion 40. This vertex is also referred to as a pivot column.

In some embodiments comprising the buoyancy adjustment system, this system may be configured to adjust the floatability of the support structure 4 to selectively cause a submersion of the front structural segment 43' (e.g. by modifying the floatability of the floating base 40 as a whole, or by selectively modifying the floatability of a part of the floating base 40 to cause a submersion of the front structural segment 43'). Further, the buoyancy adjustment system may (alternatively or complementarily) be configured to act in coordination with the lifting system 5 such that, when a heavy component (e.g. a nacelle 2 or a nacelle submodule 20, 21) is first lifted from the ground of from a vessel V, the lifting system 5 may be activated to lift the heavy component to a point that an initial load is obtained, and then the buoyancy adjustment system may be activated to start deballasting the platform (e.g. increasing the buoyancy of the platform) such that the load is slowly lifted reducing the risk of sudden heaving or pitching motion of the floating support structure 4.

The support structure 4 of Figs. 7A-7D comprises an optional connecting system 42 configured to be connected to a vessel V for reducing a relative movement of the vessel V with respect to the support structure 4. The connecting system 42 may be advantageously combined with the buoyancy adjustment system. For example, the buoyancy system may be configured to reduce the floatability of the floating base 40 when a vessel V is connected to the support structure 4 by means of the connecting system 42. The connecting system 42 may comprise a plurality of cables 42 configured to be connected to the vessel V to provide a tensioning force between the support structure 4 and the vessel V. Figs. 7A shown the preferred and optional configuration in which the connecting system 42 comprises two cables 42 configured to connect the support structure 4 (e.g. optionally a first vertex of the front segment 43', as shown in Fig. 7A) to a first side of a vessel V, and two cables configured to connect the support structure 4 (e.g. optionally a second vertex of the front segment 43', as shown in Fig. 7A) to a second side of a vessel V.

Figs. 7A- 7B show a sequence of in which a nacelle 2 of a wind turbine is lifted by the one or more lifting elements 50 (not visible in detail in the figures) from a vessel V towards the nacelle support module 3. Figs. 7C-7D represent the same nacelle support system 1 of Figs. 7A-7B but in this case showing a sequence in which a submodule 21 of the nacelle 2 is lowered from the nacelle support module 3 towards a vessel V arranged below the nacelle support module 3 (i.e. the vessel V being arranged within the receiving space arranged as a continuation of the unobstructed operational space).

## Claims

1. A nacelle support system (1) for a nacelle (2) of wind turbine, the nacelle support system (1) comprising:
a nacelle support module (3) comprising: an open lower portion (30); an open front portion (31); a main compartment (32) accessible from the open lower portion (30) and configured to receive a nacelle (2) of a wind turbine through the open lower portion (30); and a locking system (33) configured to lock the nacelle (2) of the wind turbine in an operative position (O) within the main compartment (32); and
a support structure (4) comprising a base portion (40) and one or more structural elements (41) extending upwards in an at least partially vertical direction (Z) from the base portion (40);
wherein the nacelle support module (3) is configured to be connected to an upper part (410) of each of the one or more structural elements (41); and
wherein the support structure (4) is configured such that, when the nacelle support module (3) is arranged connected to the one or more structural elements (41), an unobstructed operational space (S) is provided below the nacelle support module (3), said operational space (S) being configured to allow a nacelle (2) of a wind turbine to be inserted into and/or removed from the main compartment (32) through the open lower portion (30).

2. The nacelle support system (1) of claim 1, wherein the nacelle support module (3) comprises one or more predetermined lifting positions (34) configured for arranging one or more lifting elements (50) for lifting at least a part (20, 21) of a nacelle (2) of a wind turbine into the main compartment (32) and/or for lowering at least a part (20, 21) of a nacelle (2) of a wind turbine out of the main compartment (32);
wherein preferably each predetermined lifting position (34) is arranged in a respective longitudinal position along a longitudinal direction of the main compartment (32);
wherein more preferably each predetermined lifting position (34) comprises a set of one or more operative spots (340), each operative spot (340) being configured for arranging thereon one lifting element (35), wherein preferably the operative spots (340) of each set of operative spots (340) are arranged in parallel to each in a same longitudinal position along the longitudinal direction of the main compartment (32).

3. The nacelle support system (1) of claim 2, wherein the one or more predetermined lifting positions (34) are arranged above the main compartment (32); wherein preferably the one or more predetermined lifting positions (34) are arranged on an upper external portion (35) of the nacelle support module (3) or in an auxiliary compartment arranged above the main compartment (32).

4. The nacelle support system (1) of claims 2 o 3, further comprising a lifting system (5) comprising one or more lifting elements (50) configured to be arranged, preferably removably arranged, in the one or more predetermined lifting positions (34) of the nacelle support module (3), and further configured for lifting at least a part (20, 21) of a nacelle (2) of a wind turbine into the main compartment (32) and/or for lowering at least a part (20, 21) of a nacelle (2) of a wind turbine out of the main compartment (32); wherein preferably:
the lifting system (5) comprises one or more groups of lifting elements (50) and/or
each lifting element (50) is configured as a strand jack (50) comprising a hydraulic cylinder (500) and a one or more cables (501), the hydraulic cylinder (500) comprising a first clamping mechanism and a second clamping mechanism configured to alternately clamping the one or more cables, the hydraulic cylinder (500) being configured to provide a relative movement between the first clamping mechanism and the second clamping mechanism, and the one or more cables (501) being configured to grip a nacelle (2) of a wind turbine or a part (20, 21) of a nacelle (2) of a wind turbine for being lifted and/or lowered.

5. The nacelle support system (1) of claim 4, wherein the one or more predetermined lifting positions (34) are configured as a plurality of predetermined lifting positions (34), and wherein the lifting elements (350) are configured to be movable between different predetermined lifting positions (34) of the plurality of predetermined lifting positions (34);
wherein preferably the lifting system (5) comprises one or more rails configured to allow a displacement of the lifting elements (50) between different predetermined lifting positions (34) of the plurality of predetermined positions.

6. The nacelle support system of any of claim 4 or 5, further comprising at least one auxiliary lifting element (6) configured to be attached, preferably removably attached, to the nacelle support module (3); wherein preferably the at least one auxiliary lifting element (6) is further configured:
to move the lifting elements (50) of the lifting system (5) between different predetermined lifting positions (34) of the plurality of predetermined lifting positions (34); and/or
to lift the lifting system (5) of lifting elements (50) to the nacelle support module (3) and/or to lower the lifting system (5) of lifting elements (50) from the nacelle support module (3).

7. The nacelle support system (1) of any of the preceding claims, wherein the nacelle support module (3) is configured to form a cover surface (36) configured as an upper cover of the main compartment (32);
wherein preferably the cover surface (36) is further configured as rear cover of the main compartment (32) for protecting a nacelle (2) of a wind turbine when arranged in the operative position (O).

8. The nacelle support system (1) of any of the preceding claims, wherein the locking system (33) comprises a plurality of retractable pins (330), each pin (330) being configured to be selectively extended for being inserted into a connecting hole (22) of the nacelle (2) of the wind turbine and into at least one receiving hole (37A, 37B) of the nacelle support module (3) for locking the nacelle (2) in the operating position (O) within the main compartment (32);
wherein preferably the at least one receiving hole (37A, 37B) comprises two receiving holes (37A, 37B), each arranged in a corresponding connecting lug (38A, 38B) of the nacelle support module (3), wherein the two connecting lugs (38A, 38B) are configured such that, when the nacelle (2) of the wind turbine is arranged in the operating position (O), the connecting hole (22) is arranged between the two receiving holes (37A, 37B), thereby allowing the respective retractable pin to pass through the two receiving holes (37A, 37B) and the connecting hole (22).

9. The nacelle support system (1) of claim 8, wherein the plurality of retractable pins (330) comprises at least one, preferably at least two, front retractable pins (330F) arranged in a front part of the main compartment (32) and at least one, preferably at least two, rear retractable pins (330R) arranged in a rearward position with respect to the front retractable pins (330F);
wherein preferably the front retractable pins (330F) and the rear retractable pins (330R) are configured to be extended in opposed directions;
wherein more preferably the front retractable pins (330F) are configured to be extended towards a front direction (F) and the rear retractable pins (330R) are configured to be extended towards a rear direction (R).

10. The nacelle support system (1) of any of the preceding claims, further comprising a nacelle (2) of a wind turbine configured to be arranged in the operating position (O) within the main compartment (32) of the nacelle support module (3); wherein preferably the nacelle (2) of the wind turbine comprises a plurality of submodules (20, 21) configured to be removably connected between them as part of the nacelle (2) of the wind turbine; wherein more preferably the plurality of submodules (20, 21) comprises a submodule (20, 21) comprising a gearbox and/or a generator.

11. The nacelle support system (1) of claim 10, wherein the nacelle (2) of the wind turbine further comprises a frame structure, said frame structure being configured to be attached to the nacelle (2) wind turbine and further configured as an interacting interface between the nacelle (2) wind turbine and the nacelle support module (3), such that the locking system (33) is configured to lock the nacelle (2) of the wind turbine in the operative position (O) within the main compartment (32) by interacting with the frame structure.

12. The nacelle support system (1) of claims 10 or 11, wherein the nacelle (2) of the wind turbine comprises:
a lower surface (24) having a shape configured such that, when the nacelle (2) is arranged in the operative position (O) within the main compartment (32), the lower surface (24) of the nacelle (2) fits by form-fitting with the open lower portion (30) of the nacelle support module (3), thereby closing a lower part of the main compartment (32); and/or
a front surface (25) having a shape configured such that, when the nacelle (2) is arranged in the operative position (O) within the main compartment (32), the front surface (25) of the nacelle (2) fits by form-fitting with the open front portion (31) of the nacelle support module (3), thereby closing the front part of the main compartment (32).

13. The nacelle support system (1) of any of the preceding claims, wherein the one or more structural elements (41) are further configured to extend upwards from the base portion (40) with an inclination towards a front direction (F), such that when the nacelle support module (3) is connected to the upper part (410) of each structural element (41), the nacelle support module (3) at least partially overhangs in the front direction (F) with respect to the base portion (40).

14. The nacelle support system (1) of any of the preceding claims, wherein the base portion (40) of the support structure (4) is configured as a floating base configured to be connected to a pre-laid mooring structure (7) such that the support structure (4) is allowed to weathervane relative to the pre-laid mooring structure (7);
wherein preferably the one or more structural elements (41) extending upwards from the base portion comprises a plurality of legs (41), wherein said legs (41) are configured to be connected to the nacelle support module (3) such that at least part of the unobstructed operational space (S) is arranged between the plurality of legs (41);
wherein more preferably the plurality of legs (41) comprises three legs (41) forming a tripod extending from the base portion (40) upwards.

15. The nacelle support system (1) of claim 14, wherein the floating base (40) is configured such that a receiving space for a vessel (V) suitable for carrying a nacelle (2) of a wind turbine is provided below the nacelle support module (3); wherein preferably:
the floating base (40) is configured such that at least a part of the floating base is configured to be under a water level such that a vessel (V) is allowed to have access to the receiving space; and/or
the floating base comprises a buoyancy adjustment system configured to regulate the floatability of the floating base.
